# EUROPEAN PATENT SPECIFICATION

(11) **EP 0 481 643 B1**
(45) Date of publication and mention of the grant of the patent: **28.12.1994**
(21) Application number: 91309164.1
(22) Date of filing: 07.10.1991
(51) Int. Cl.: C04B 35/80, C04B 35/65, C04B 35/58

(54) **Ceramic composition**
Keramische Zusammensetzung
Composition céramique

(30) Priority: 18.10.1990 GB 9022638
(43) Date of publication of application: 22.04.1992
(73) Proprietor: FOSECO INTERNATIONAL LIMITED, Nechells Birmingham B7 5JR (GB)
(72) Inventor: Robertson, John, Stafford, ST16 1UD (GB); Juma, Kassim, Stafford, ST17 4EG (GB)
(74) Representative: Eyles, Winifred Joyce

(56) References cited:
- EP-A- 0 107 349
- EP-A- 0 195 417
- EP-A- 0 423 793
- DE-A- 3 329 250
- US-A- 4 904 626
- WORLD PATENTS INDEX LATEST Week 8611, Derwent PublicationsLtd., London, GB; AN 86-072256 & JP-A-61 021 976 (JAPAN METAL & CHEM.)

## Description

This invention relates to a novel ceramic composition and to a method of making it.

It is known to use various compositions based on zirconia and boron nitride as formed shapes for various purposes to utilise the ceramic, heat-resistant properties of these materials. However, such compositions normally require a powdered mixture of the ingredients to be sintered after shaping to the desired form in order to achieve the necessary binding together of the individual particles of the mixture that is required if they are to be considered for end uses such as liners for furnace tap holes and breaker rings in horizontal casting units.

USP 4540674 discloses a silicon nitride composite refractory material having improved thermal shock characteristics and molten steel resistance which consists of silicon nitride at 20 to 60% by weight, refractory material at 10 to 50% by weight and boron nitride at 1 to 20% by weight. The composite has silicon nitride bonds as bonding structures. This can be achieved by blending and moulding a mixture of silicon, refractory materials, boron nitride and a binder and then heating the moulded product at 1200°C to 1500°C in an atmosphere of nitrogen or ammonia.

The present invention aims to provide a further improved composite refractory of this type, i.e. one that is satisfactorily bonded without sintering.

Accordingly, in a first aspect, the invention provides a composite ceramic refractory material comprising a particulate mixture of boron nitride, stabilised zirconia and silicon nitride bonded together by whiskers of silicon nitride.

The whiskers of silicon nitride are conveniently formed in-situ by heating the mixture of particulate boron nitride and stabilised zirconia, which additionally contains powdered metallic silicon, in an atmosphere of nitrogen.

Accordingly, in a second aspect the invention provides a method of making a bonded ceramic composite in which a particulate mixture is formed of boron nitride, stabilised zirconia, silicon nitride and silicon, the mixture is formed to the desired shape and is then heated in an atmosphere of nitrogen.

The heating is preferably carried out at between 1000 and 1500°C especially 1200°to 1400°C, which is substantially lower than the temperatures that would be required to effect adequate sintering of the constituents of the mixture.

The mixture of particulates will normally require to be held together by temporary organic binders, e.g. dextrin or an acrylic binder, during the shaping stage. Such binders, which are well known in the art, are driven off during the firing stage and their role is taken over in the present invention by the reaction of the metallic silicon with the nitrogen which form fibres or whiskers of silicon nitride which bond the particulates of the mixture together.

The incorporation of stabilised zirconia and, particularly, silicon nitride in particulate form, i.e. in addition to the in-situ formed bonding form of silicon nitride, has been found to be particularly advantageous. Although not wishing to be limited by any particular theory, it is believed that the silicon nitride particulate material not only enhances erosion resistance in its own right, but it is preferentially attacked by oxygen and thereby protects the boron nitride from oxygen-degradation. Oxygen reacts with the particulate silicon nitride to form a stable silicon-oxynitride coating, thereby enhancing further the stability and integrity of the product.

In one embodiment of the method of the invention, the particulate materials are mixed with the temporary binder or binders and a slurry of the resulting composition is formed. The slurry is then slip-cast to the desired shape of the final article, the cast shape is dried and then fired under an atmosphere of nitrogen. The firing stage is preferably carried out under moderate pressure, e.g. 2 to 3 p.s.i. (10 to 20 kPa).

In another embodiment of the method, the particulate materials are mixed with the temporary binder or binders and the resulting composition is uni-axially or isostatically pressed, preferably at ambient temperature, to the desired shape. The pressed shape is then fired in an atmosphere of nitrogen as for the above-described slip-cast shape.

The stabilised zirconia may be partially stabilised or fully stabilised. Such zirconias are well known per se in the art and may be stabilised, for example, with yttria or magnesia or other rare earth metallic oxides.

The proportions of the mixture may vary fairly widely but preferably contain from 10 to 30 parts by weight of boron nitride, 20 to 40 parts by weight of stabilised zirconia, 5 to 25 parts by weight of silicon nitride and 15 to 30 parts by weight of silicon metal.

The particulate sizes of the constituents may be, for example:

| | |
|---|---|
| boron nitride | sub 2 microns |
| stabilised zirconia | sub 2 microns |
| silicon nitride | sub 53 microns |
| silicon | sub 53 microns |

Typically, the finished, fired products may have a porosity from 15 to 40%.

The bonded products of the invention have excellent thermal shock resistance and can, for example, readily accommodate a rapid temperature change of more than 1200°C. They have high thermal conductivity and low thermal expansion and are non-wetting to liquid metals. They exhibit little or no shrinkage on firing unlike conventional ceramic materials which may shrink up to as much as 20%. They are, therefore, eminently suitable for applications such as the above-mentioned liners for furnace tap holes and breaker rings for horizontal casting units and for a variety of other components in continuous casting equipment, crucibles and the like.

The silicon nitride bond that is formed together with the enhancement of properties due to the particulate silicon nitride give the products excellent strength and integrity and the overall properties of the finished material provide excellent erosion resistance to molten metals, e.g. molten steel.

The invention is further illustrated in the following Example.

### EXAMPLE

A mixture of the following proportions by weight was made:

| | % by weight | Size |
|---|---|---|
| boron nitride | 22.5 | sub 0.5 micron |
| yttria-stabilised zirconia (11% yttria) | 35.0 | sub 2 micron |
| silicon nitride | 17.5 | sub 53 micron (300 mesh) |
| silicon | 25.0 | sub 53 micron (300 mesh) |

The mixture was then further thoroughly mixed with 1.0% by weight of dextrin binder and was uni-axially pressed into the form of a tap hole liner at a pressure of 750 kgs/cm² and fired under an atmosphere of nitrogen at a temperature from 1200°C to 1400°C for 60 to 100 hours.

The liner so formed was of 130 mm outside diameter, 75 mm inside diameter and had a height of 150 mm.

The liner was set into a small tundish and after pre-heating a charge of molten steel (300 kgm) with typical BOF composition (0.1% Si; 0.3%, Mn, 0.05%C and traces of S & P) at a measured temperature of 1650°C was poured through the liner.

The process was repeated continuously - with a 15 minute pause to raise the steel temperature to 1650°C. During the re-heating cycle the temperature of the lining material was allowed to fall to 600°C - 700°C - before being subjected to an instantaneous temperature step of 1000°C up to 1650°C. The material was subjected to the thermal shocks of 11 such cycles without exhibiting any physical or mechanical deterioration.

At the completion of the trial the examination of the internal bore of the liner showed no change in dimensions, the non-wetting character of the ceramic having prevented sticking of either the molten steel or slag to the surface.

Subsequent examination of the body of the material via scanning electron microscope showed that contamination of the ceramic bore was limited to a depth of 200 microns.

The example clearly shows the ability of the ceramic material in respect of:
resistance to erosion by hot molten metal,
a high resistance to thermal shock of 1000C°+,
the non-wetting properties of the ceramic to both molten metal and molten slag.

## Claims

1. A composite ceramic refractory material comprising boron nitride characterised in that it is formed from a particulate mixture of boron nitride, stabilised zirconia and silicon nitride bonded together by whiskers of silicon nitride.

2. A composite ceramic refractory material according to Claim 1, characterised in that the mixture contains from 10 to 30 parts by weight of boron nitride.

3. A composite ceramic refractory material according to Claim 1 or 2, characterised in that the mixture contains from 20 to 40 parts by weight of stabilised zirconia.

4. A composite ceramic refractory material according to Claim 1, 2, or 3, characterised in that the mixture contains 5 to 25 parts by weight of silicon nitride.

5. A composite ceramic refractory material according to any one of the preceding claims, characterised in that the whiskers of silicon nitride are formed from the incorporation of silicon metal in the mixture.

6. A composite ceramic refractory material according to Claim 5, characterised in that the mixture contains 15 to 30 parts by weight of silicon metal.

7. A composite ceramic refractory material according to any one of the preceding claims characterised in that the boron nitride and stabilised zirconia particles in the mixture are less than 2 microns size.

8. A composite ceramic refractory material according to any one of the preceding claims, characterised in that the silicon nitride particles in the mixture are less than 53 microns size.

9. A furnace tap hole liner or a breaker ring for a horizontal casting unit formed from a composite ceramic refractory material according to any one of the preceding claims.

10. A method of making a bonded ceramic composite material comprising firing a shaped mixture containing particulate boron nitride, characterised in that a particulate mixture is made of boron nitride, stabilised zirconia, silicon nitride and silicon and is fired in an atmosphere of nitrogen.

11. A method according to Claim 10, characterised in that the firing is carried out between 1000° and 1500°C.

12. A method according to Claim 10 or 11, characterised in that the mixture of particulates is held together during the shaping stage by a temporary binder which is driven off during the firing stage.

13. A method according to Claim 10, 11 or 12, characterised in that the particulate materials are mixed with a temporary binder, a slurry of the resulting composition is formed and the slurry is slip cast to the desired shape prior to firing.

14. A method according to any one of Claims 10 to 13, characterised in that the firing is carried out under a pressure of 10 to 20 kpa.

15. A method according to Claim 10, 11 or 12, characterised in that the particulate materials are mixed with a temporary binder and the resulting composition is uni-axially or isostatically pressed at ambient temperature to the desired shape prior to firing.

## Patentansprüche

1. Feuerfestes keramisches Verbundmaterial aus Bornitrid, dadurch gekennzeichnet, daß es aus einer teilchenförmigen Mischung aus Bornitrid, stabilisiertem Zirkoniumdioxid und Siliziumnitrid, die mittels Siliziumnitrid-Whiskers miteinander verbunden sind, hergestellt wird.

2. Feuerfestes keramisches Verbundmaterial nach Anspruch 1, dadurch gekennzeichnet, daß die Mischung 10 bis 30 Gewichtsteile Bornitrid enthält.

3. Feuerfestes keramisches Verbundmaterial nach Anspruch 1 oder 2, dadurch gekennzeichnet, daß die Mischung 20 bis 40 Gewichtsteile stabilisiertes Zirkoniumdioxid enthält.

4. Feuerfestes keramisches Verbundmaterial nach Anspruch 1, 2 oder 3, dadurch gekennzeichnet, daß die Mischung 5 bis 25 Gewichtsteile Siliziumnitrid enthält.

5. Feuerfestes keramisches Verbundmaterial nach einem der vorhergehenden Ansprüche, dadurch gekennzeichnet, daß die Siliziumnitrid-Whiskers durch Einbau von Siliziummetall in die Mischung gebildet werden.

6. Feuerfestes keramisches Verbundmaterial nach Anspruch 5, dadurch gekennzeichnet, daß die Mischung 15 bis 30 Gewichtsteile Siliziummetall enthält.

7. Feuerfestes keramisches Verbundmaterial nach einem der vorhergehenden Ansprüche, dadurch gekennzeichnet, daß die Bornitrid- und stabilisierten Zirkoniumdioxidteilchen in der Mischung eine Größe von weniger als 2 Mikron aufweisen.

8. Feuerfestes keramisches Verbundmaterial nach einem der vorhergehenden Ansprüche, dadurch gekennzeichnet, daß die Siliziumnitridteilchen in der Mischung eine Größe von weniger als 53 Mikron aufweisen.

9. Ofenabstichlochauskleidung oder Unterbrecherring für eine Horizontalgießvorrichtung, die bew. der aus einem feuerfesten keramischen Verbundmaterial nach einem der vorhergehenden Ansprüche gefertigt wird.

10. Verfahren zur Herstellung eines Zusammengesinterten keramischen Verbundmaterials durch Brennen einer teilchenförmiges Bornitrid enthaltenden geformten Mischung, dadurch gekennzeichnet, daß man eine teilchenförmige Mischung aus Bornitrid, stabilisiertem Zirkoniumdioxid, Siliziumnitrid und Silizium herstellt und in einer Stickstoffatmosphäre brennt.

11. Verfahren nach Anspruch 10, dadurch gekennzeichnet, daß das Brennen zwischen 1000 und 1500°C erfolgt.

12. Verfahren nach Anspruch 10 oder 11, dadurch gekennzeichnet, daß die Mischung aus teilchenförmigem Material während der Formungsstufe durch ein flüchtiges Bindemittel, das während der Brennstufe ausgetrieben wird, zusammengehalten wird.

13. Verfahren nach Anspruch 10, 11 oder 12, dadurch gekennzeichnet, daß die teilchenförmigen Materialien mit einem flüchtigen Bindemittel vermischt werden, ein Brei der entstehenden Masse gebildet wird und der Brei vor dem Brennen durch Schlickergießen in die gewünschte Form gebracht wird.

14. Verfahren nach einem der Ansprüche 10 bis 13, dadurch gekennzeichnet, daß das Brennen unter einem Druck von 10 bis 20 kpa erfolgt.

15. Verfahren nach Anspruch 10, 11 oder 12, dadurch gekennzeichnet, daß die teilchenförmigen Materialien mit einem flüchtigen Bindemittel vermischt werden und die entstehende Masse vor dem Brennen bei Umgebungstemperatur durch uniaxiales oder isostatisches Verpressen in die gewünschte Form gebracht wird.

## Revendications

1. Un matériau réfractaire céramique composite comprenant du nitrure de bore caractérisé en ce qu'il est formé à partir d'un mélange de particules de nitrure de bore, d'oxyde de zirconium stabilisé et de nitrure de silicium agglomérées ensemble par des whiskers de nitrure de silicium.

2. Un matériau réfractaire céramique composite selon la revendication 1, caractérisé en ce que le mélange contient de 10 à 30 parties en poids de nitrure de bore.

3. Un matériau réfractaire céramique composite selon la revendication 1 ou 2, caractérisé en ce que le mélange contient de 20 à 40 parties en poids d'oxyde de zirconium stabilisé.

4. Un matériau réfractaire céramique composite selon la revendication 1, 2 ou 3, caractérisé en ce que le mélange contient de 5 à 25 parties en poids de nitrure de silicium.

5. Un matériau réfractaire céramique composite selon l'une quelconque des revendications précédentes, caractérisé en ce que les whiskers de nitrure de silicium sont formés en incorporant du silicium métallique dans le mélange.

6. Un matériau réfractaire céramique composite selon la revendication 5, caractérisé en ce que le mélange contient de 15 à 30 parties en poids de silicium métallique.

7. Un matériau réfractaire céramique composite selon l'une quelconque des revendications précédentes caractérisé en ce que les particules de nitrure de bore et d'oxyde de zirconium stabilisé dans le mélange ont une taille de moins de 2 microns.

8. Un matériau réfractaire céramique composite selon l'une quelconque des revendications précédentes, caractérisé en ce que les particules de nitrure de silicium dans le mélange ont une taille de moins de 53 microns.

9. Une garnissage de trou de coulée de four ou un anneau d'étranglement pour une unité de coulée horizontale formés à partir d'un matériau réfractaire céramique composite selon l'une quelconque des revendications précédentes.

10. Une méthode de fabrication d'un matériau céramique composite aggloméré comprenant la cuisson d'un mélange moulé contenant des particules de nitrure de bore, caractérisée en ce que le mélange de particules est fait de nitrure de bore, d'oxyde de zirconium stabilisé, de nitrure de silicium et de silicium et est cuit sous atmosphère d'azote.

11. Une méthode selon la revendication 10, caractérisée en ce que la cuisson est effectuée entre 1000° et 1500°C.

12. Une méthode selon la revendication 10 ou 11, caractérisée en ce que le mélange de particules est maintenu ensemble pendant l'étape de moulage par un agglomérant temporaire qui est éliminé pendant l'étape de cuisson.

13. Une méthode selon la revendication 10, 11 ou 12, caractérisée en ce que les matériaux sous forme de particules sont mélangés à un agglomérant temporaire, en ce qu'une boue de la composition résultante est formée et en ce que la boue est moulée en barbotine à la forme désirée avant cuisson.

14. Une méthode selon l'une quelconque des revendications 10 à 13, caractérisée en ce que la cuisson est effectuée sous une pression de 10 à 20 kPa.

15. Une méthode selon la revendication 10, 11 ou 12, caractérisée en ce que les matériaux sous forme de particules sont mélangés à un agglomérant temporaire et en ce que la composition résultante est moulée à la forme désirée sous pression en mode uni-axe ou en mode isostatique à la température ambiante avant cuisson.
